# EUROPEAN PATENT APPLICATION

(11) **EP 3 273 361 A1**
(43) Date of publication of application: **24.01.2018**
(21) Application number: 16180790.4
(22) Date of filing: 22.07.2016
(51) Int. Cl.: G06F 17/30

(54) **METHOD AND SYSTEM FOR ADAPTIVE PROCESSING OF RESOURCE USAGE RECORDS**

(71) Applicant: SAP SE, 69190 Walldorf (DE)
(72) Inventor: DAI, Bin, 69190 Walldorf (DE)
(74) Representative: Richardt Patentanwälte PartG mbB

(57) **Abstract**

A computer cluster comprising a data storage server and an application server, a computer-implemented method, and a computer readable medium having stored thereon a computer executable program code for processing of resource usage records (e.g. CDRs) is disclosed herein. The computer cluster is operable for supporting operation of database engines providing access to the resource usage records stored in the data storage of the data storage server.

## Description

### Technical field

This invention relates to telecommunications processing systems. In particular, this invention relates to a flexible and efficient processing of the resource usage records (e.g. call detail records (CDRs)).

### Background

Effective processing of usage-related transactions, such as consumption items related to telecommunications (e.g. CDRs), as usual requires customized data processing engines. On the other hand customization of a data processing engine for processing of the usage-related transactions in various applications like telecommunications gets more complicated because the spectrum of services provided within a framework of one network is ever increasing. As a result thereof the data processing system has to be operable for processing substantially heterogeneous data. Besides processing of CDRs as it was just a few years ago, modern telecommunication networks offer a broad spectrum of services. They process purchases and payments of users, manage specifications of the resources offered to users, manage client base, etc. Besides taking over well recognized services, the telecommunication networks are used for providing novel services like Life Management. In its own turn the heterogeneity of data is entangled with a problem of generation of repots by processing this data, which might be even more heterogeneous in their nature than the data.

### Summary

Database engine is, as understood here, a software component configured to process data stored in a data storage. The data base engine is configured to perform operations related to retrieval, management, and storage of data stored in the data storage. The data based engine can be further configured for processing the retrieved data like performing mathematical calculations using the retrieved data. The database engine can comprise several tiers (i.e. functional software modules). The tiers can be arranged in a multitier architecture, wherein each of the tiers is customized for execution of specific operations. For instance one tier can be customized for retrieval of data, while another tier can be customized for executing mathematical calculus using the retrieved data.

The disclosure generally describes computer-implemented methods, computer-readable media, and computer clusters for processing resource usage records. The resource usage records can be for instance CDRs generated in a telecommunication network or electrical power consumption records generated by smart electrical power meters operable to report electrical power consumption data throughout a day, for instance serval times per hour. The resource usage records can have different types. The resource usage records of one type can comprise descriptions of internet connections established by users via their mobile terminals (e.g. smartphones). The resource usage records of another type can be CDRs comprising descriptions of telephone calls made by users and/or descriptions of short message services (SMSs) sent by users. The resource usage records of further types can comprise descriptions of many other services available to the users in the digital cellular telecommunication networks. In addition the resource usage records of yet another types can comprise descriptions of resources used by users (usage of electricity in households) and registered by network components (such as smart electrical power meters), which can be integrated in the digital cellular telecommunication networks or any other digital networks.

As usual database engines and hardware resources used for their operation are customized for particular types of data and/or particular operations, because customization increases productivity of data processing. On the other hand such a broad spectrum of resource usage records requires substantial computer power for their processing primarily because of the heterogeneity of data. Straight forward solution based on a single computer system supporting operation of a single database engine operable for processing a broad spectrum of resource usage records might require a lot of resources because it is quite difficult to develop a universal computer system capable of effective processing of the heterogeneous data. The solution described herein is based on utilization of several database engines, wherein each of which can be customized for processing of the respective types of the resource usage records. In addition, the database engines can have a multitier architecture, wherein each of the tiers is customized for execution of the respective types of operations. The data base engine can be executed on several computer systems, wherein each tier of the database engine is executed on the dedicated computer system. This breakdown of the workload of processing of the heterogeneous data can provide for implementation of a computer system or a computer cluster being operable for effective processing of the heterogeneous data without high demand for computer resources and/or provide rapid feedback for resource providers.

It is an objective of embodiments of the invention to provide for a system configured to provide effective processing of resource usage records, a computer-implemented method for effective processing of resource usage records, and a computer readable medium having stored thereon a computer executable program code for effective processing of resource usage records. Advantageous embodiments are described in the dependent claims.
According to one embodiment, the present invention relates to a computer cluster comprising a data storage server and an application server. The data storage server is configured to perform the following: receiving resource usage records on the data storage server from network components, wherein the network components are operable for registering usage events of resources provided according to resource specification and generating the resource usage records on a basis of the registered usage events; and storing the received resource usage records in a data storage of the data storage server. The application server is configured to perform the following: receiving on the application server a data request comprising specifications of operations to be executed using the resource usage records stored in the data storage; selecting, according to a set of selection criteria, one of database engines of a set of database engines configured to operate the data storage; and generating data according to the data request on the selected database engine by executing said operations.

According to another embodiment, the present invention relates to a computer-implemented method for computer-implemented method for processing resource usage records. The method comprises the following: receiving the resource usage records on a data storage server from network components, wherein the network components are operable for registering usage events of resources provided according to resource specifications of the resources and generating the resource usage records on a basis of the registered usage events; storing the received resource usage records in a data storage of the data storage server; receiving on an application server a data request comprising specifications of operations to be executed using the resource usage records stored in the data storage; selecting, according to a set of selection criteria, one of database engines of a set of database engines configured to operate the data storage; and generating data according to the data request on the selected database engine by executing said operations.

According to another embodiment, the present invention relates to a computer readable medium having stored thereon a computer executable code for execution by computer processors controlling a data storage server and an application server, wherein execution of the instructions of the executable code causes the computer processors to execute the computer-implemented method of the aforementioned embodiment.

These embodiments can be advantageous because they can enable utilization of several database engines for processing of the resource usage records, wherein one of the database engines, which configuration fits best for the workload of execution of the operations specified in the data request, can be selected for the generation of data. Moreover, in comparison with a case when the operations of the data request are sent to the database engine one by one, batch processing of a group of operations as formulated in the aforementioned embodiments can provide for a better selection of the optimum database engine. Selection of the database engine using a single operation can be not optimal because it can result in a choice of the database engine which is optimal for the execution of said single operation and it not optimal for the rest of operations to be executed for executing of the data request.

According to another embodiment of the present invention, the set of selection criteria is configured such that that the selected database engine is the one which is operable to execute the generating of the data according to the data request by executing said operations faster than other database engines of the set of database engines.

According to another embodiment of the present invention the set of selection criteria determines matching between operation types of the operations comprised in the data request and operation types of operations for which the database engines are customized.

According to another embodiment of the present invention the set of selection criteria determines matching between types of the resource usage records to be processed in a process of the generating of the data according to the data request on the selected database engine and types of the resource usage records for processing of which the database engines are customized.

This embodiment can be advantageous, because it can provide for optimum selection of the database engine which operable to execute the generation of data faster than other database engines. The selection can be based on matching between the types of the operations specified in the data request and the types of the operations for execution of which the selected database is customized. In addition or as alternative the selection can be based on matching between the types of the resource usage records to be processed and the types of the resource usage records for processing of which the database engine is customized.

According to another embodiment of the present invention, the generating of the data according to the data request on the selected database engine by executing said operations comprises registering a performance characteristic of performance of the selected database engine in a process of the generating of the data according to the data request on the selected database engine by executing said operations and wherein the computer-implemented method comprises updating the set of selection criteria when the registered performance characteristic does not match a predefined performance characteristic.

This embodiment can be advantageous because it can provide for optimization of the set of selection criteria upon the execution of the data generation. According to another embodiment of the present invention, the computer-implemented method comprises updating the resource specifications on a basis of the generated data and sending the updated resource specifications to the network components.

This embodiment can be advantageous because it can provide a feedback to the network components related to processing of the resource usage records. For instance it can provide for a change in availability or price of the resource resulting from usage of the resources.

According to another embodiment of the present invention, wherein the batch processing system is further configured to perform the steps of: monitoring a volume of data transmitted per time unit from the real time event driven rating system to the batch processing system; and causing the web interface to execute the sending of the event record when the volume of the data transmitted per time unit is below a second threshold value.
According to another embodiment of the present invention, the selected database engine comprises tiers arranged in a multitier architecture of the selected database. The generating of the data according to the data request on the selected database engine by executing said operations comprises: distributing a workload of a process of the generating of the data according to the data request on the selected database engine by executing said operations between hardware resources of a set of hardware resources comprising the data storage server and the application server, wherein each of the tiers is executed on the respective hardware resource assigned to the each of the tiers according to the distribution of the workload.

This embodiment can be advantageous, because it can provide for optimum performance of the selected database engine provided by execution of the tiers on the respective hardware resources, wherein the hardware resources are customized for optimal execution of the respective tiers.

According to another embodiment of the present invention, one or more of the tiers are executed on the application server and/or another one or more of the tiers are executed on the data storage server.

This embodiment can be advantageous because, it can provide for optimal distribution of the workload between the data storage server and the application server.

According to another embodiment of the present invention, the distributing of the workload of the process of the generating of the data according to the data request on the selected database engine by executing said operations between hardware resources of the set of hardware resources comprising the data storage server and the application server is performed such that each of the tiers executes the operations having types for execution of which it is customized.

This embodiment can be advantageous because, it can provide for distributing of the workload between the tiers such that each of the tiers executes operations it is customized for.

According to another embodiment of the present invention, the distributing of the workload of the process of the generating of the data according to the data request on the selected database engine between hardware resources of the set of hardware resources comprising the data storage server and the application server is performed such that data traffic in a process of executing of the generating of the data according to the data request on the selected database engine by executing said operations between hardware resources is minimized.

This embodiment can be advantageous because, it can provide for minimization of data traffic between hardware resources. This feature can be of particular advantage for processing of big volumes of data.

According to another embodiment of the present invention, according to the data request data to be obtained as a result of execution of one of the operations which specification is comprised in the data request is to be used as input for execution of another one of the operations which specification is comprised in the data request, wherein the distributing of the workload of the process of the generating of the data according to the data request on the selected database engine by executing said operations between hardware resources of the set of hardware resources comprising the data storage server and the application server is performed such that the one of the operations and the another one of the operations are executed on the same hardware resource of the set of hardware resources.

This embodiment can be advantageous because, it can provide for minimization of data traffic between hardware resources. This feature can be of particular advantage for processing of big volumes of data.

According to another embodiment of the present invention, the data to be obtained as a result of execution of one of the operations which specification is comprised in the data request is stored as a database on said hardware resource of the set of hardware resources.

This embodiment can be advantageous, because it generates intermediate results which can be accessed by other applications. In this case there is no need to repeat operations of the data request being the same for other data requests. Instead repeating operations it can be possible to retrieve data from the newly generated database.

According to another embodiment of the present invention, the distributing of the workload of the process of the generating of the data according to the data request on the selected database engine by executing said operations between hardware resources of the set of hardware resources comprising the data storage server and the application server is performed according to a set of matching criteria.

This embodiment can be advantageous because it can provide for flexible adaptation of the distribution of the workload. The set of matching criteria can be adapted throughout the operation of the data storage server and/or the application server.

According to another embodiment of the present invention, the set of matching criteria determines matching between specifications of hardware resources required for execution of the tiers and specifications of the hardware resources of the set of hardware resources.

According to another embodiment of the present invention, the set of matching criteria determines matching between types of the resource usage records to be processed in the process of the generating of the data according to the data request on the selected database engine by executing said operations and types of the resource usage records for processing of which the hardware resources are customized.

According to another embodiment of the present invention, the set of matching criteria determines matching between a data volume of the resource usage records to be processed in the process of the generating of the data according to the data request on the selected database engine by executing said operations and data volumes for processing of which the hardware resources are customized.

This embodiment can be advantageous because it can provide for simple and straightforward criteria for the distribution of the workload based on customization of hardware resources for execution of specific tiers and/or for processing of the resource usage records of specific types and/or for processing of specific data volumes.

According to another embodiment of the present invention, the generating of the data according to the data request on the selected database engine comprises: registering another performance characteristic of performance of the selected database engine in the process of the generating of the data according to the data request on the selected database engine by executing said operations. The computer-implemented method comprises: updating the set of matching criteria, when the another registered performance characteristic does not match another predefined performance characteristic.

This embodiment can be advantageous because it can provide for dynamic optimization of the set of matching criteria based on the performance of the selected database engine.

According to another embodiment of the present invention, the operations being mathematical operations have the operation type being a mathematical operation type, wherein the operations being database query operations have the operation type being a database query operation type, wherein the operations being data manipulation language operations have the operation type being a data manipulation language operation type, wherein the operations being data description language operations have the operation type being a data description language operation type.

This embodiment can be advantageous because it can provide for optimal breakdown of the operations in different categories according their types. In their own turn database engines can have different performance for different types of operations. Thus selection of the database having the most suitable performance for a particular set of operations which specifications is received in the data request can be performed on basis of analysis of the types of said operations.

According to another embodiment of the present invention, the resource usage records comprise fields containing items of information, wherein the resource usage records of different types comprise one or more different fields, and/or wherein the resource usage records generated on the basis of the registered usage events of the usages of each of the resources have the corresponding type of the resource usage record.

This embodiment can be advantageous because it can provide for optimal data structure of the resource usage records. The resource usage records can have the same template or similar templates, wherein the resource usage records of different types differentiate from each other by different fields in one common template of a set of similar templates.

According to another embodiment of the present invention, the performance characteristic comprises a duration in time of the generating of the data according to the data request on the selected database engine.

This embodiment can be advantageous because it can provide for an optimum performance criterion enabling comparison of the performance of the different database engines.

According to another embodiment of the present invention, the another performance characteristic comprises a duration in time of the execution of one or more operations comprised in the data request.

This embodiment can be advantageous because it can provide for an optimum performance criterion enabling comparison of the performance of the different database engines executing operations of the same type.

According to another embodiment of the present invention, the database engines are operable for processing of the same resource usage records in the data storage.

This embodiment can be advantageous because it can provide for optimum utilization of the data storage space. In this case there is no need to replicate data stored in the data storage for each of the database engines.

The details of one or more implementations of the subject matter of this specification are set forth in the accompanying drawings and the description below. Other features, aspects, and advantages of the subject matter will become apparent from the description, the drawings, and the claims.

### Figures

### DESCRIPTION OF DRAWINGS

FIG. 1 is a block diagram illustrating an example environment for processing of the resource usage records.
FIG. 2 shows a flowchart of an example method for processing of the resource usage records.

### Detailed description

This disclosure generally describes computer-implemented methods, computer-readable media, and computer systems for processing resource usage records. The resource usage records can be CDRs, records reflecting usage of various resources such as electricity, water, gas, oil, etc., state of various machines and mechanisms, for instance time left before maintenance procedures, etc. The following description is presented to enable any person skilled in the art to practice the disclosed subject matter, and is provided in the context of one or more particular implementations. Various modifications to the disclosed implementations will be readily apparent to those skilled in the art, and the general principles defined herein may be applied to other implementations and applications without departing from scope of the disclosure. Thus, the present disclosure is not intended to be limited to the described and/or illustrated implementations, but is to be accorded the widest scope consistent with the principles and features disclosed herein.

Processing of the resource usage records can trigger changes in specifications according to which the resources are provided. The changes in specifications can be provided in real time if necessary. In addition or as alternative the processing of the resource usage records can trigger iterative or real time optimization of the processing of the resource usage records.

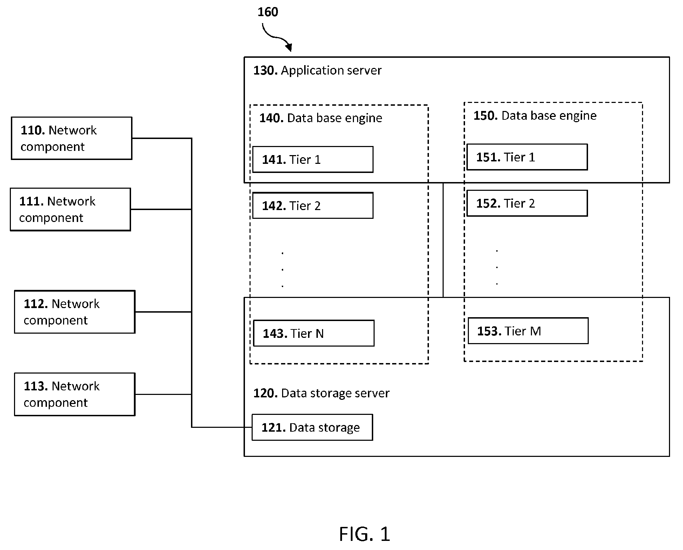

FIG. 1 illustrates an example environment for processing resource usage records. Specifically, the illustrated environment includes a computer cluster 160 comprising an application server 130 and a data storage server 120. The computer cluster 160 can comprise further hardware resources such as for instance other servers operable for storing and processing of data. The computer cluster comprises one or more database engines 140, 150. The number of database engines depicted on Fig. 1 is limited to two merely for illustrative purposes. The database engine for instance can be an SQL database engine, SAP HANA database engine, Oracle database engine, etc. The database engines can comprise tiers arranged in a multitier architecture. Database engine 140 comprises N tiers, while database engine 150 comprises M tiers, wherein N and M are integer numbers. Each of the tiers is executed on a dedicated hardware resource of the computer cluster 160. All tiers of some database engines can be executed on the data storage server. Execution of tiers of other database engines can be split between the application server 130 and the data storage server 120. In addition some tiers of yet another database engines can be executed on other hardware resources of the computer cluster 160 which are not depicted on Fig. 1. The other hardware resource can be for instance other servers, computers, data storages, etc. In the particular example depicted on Fig. 1, the first tier of the database engine 140 and the first tier of the database engine 150 are executed on the application server 130. The tier number N of the database engine 140 and the tier number M of the database engine 150 are executed on the data storage server 120. While other tiers of the database engines 140 and 150 are executed on other hardware resources of the computer cluster 160. Assignment of the hardware resources for execution of the tiers can be changed depending on availability of the hardware resources and/or in order to improve performance of the database engines.

The hardware resources of the computer cluster are communicatively connected with each other and network components 110-113 by one or more computer networks. The network components are operable for registering usage events of resources provided according to resource specifications of the resources and generating the resource usage records on a basis of the registered usage events. The network components can be for instance electrical meters registering consumption of electricity. For instance they can report an electrical power consumed by a user every 15 minutes, every day, or every month. The network components can be integrated in the digital cellular telecommunication networks and generate CDRs. The network components in general can be configured to register any resource used. The usage of the resource can be its consumption as well. The resource is understood in a context of the present invention in a very broad sense. For instance the resource usage record can be a registration of a purchase made by a user or a software program, a bank transaction, a volume of internet traffic used, consumed electrical power, etc. The data storage server 120 is configured to receive the resource usage records and store them in a data storage 121 of the data storage server. One of the aforementioned database engines or a dedicated database engine can be used for this. Alternatively the data storage can be implemented as a remote data storage of the computer cluster 160.Tthe database engines 140, 150 can be operable for processing of the same resource usage records in the data storage 121.

The resource usage records representing usage events of the resources can have different types. For instance each of the resources can have a respective type of the resource usage records generated on a basis of its usage event. The resource usage records can be generated using a universal template, wherein the resource usage records generated on basis of the usage of a specific resource can have specific fields containing information related to the usage of the specific resource. For instance, the universal template can have one or more fields representing a standardized description of the resource being the same for all resources while one or more other fields representing a description of the resource usage being specific for each of the resources. In this case the type of the resource usage record can be determined on a basis of the resource description fields and/or resource usage description fields. Database engines can be customized for processing of specific types of the resource usage records. In the other words one database engine can have better performance than the other database engines when processing the resource usage records of one or more specific types of the resource usage records, while another database can have better performance than the other database engines when processing the resource usage records of one or more other specific types of the resource usage records.

The application server 130 can receive data requests. The data requests can be received for instance from application programs which can be executed on the application server 130 or other servers or computer systems communicatively coupled with the application server 130. The data request comprises specifications of operations to be executed using the resource usage records stored in the data storage 121. The data request can further comprise specifications of the resource usage records to be processed. The execution of the operations results in a generation of data in accordance with the data request. The operations can have specific types as well. One type of operations (e.g. mathematical operation type) can be assigned to mathematical operations like Boolean operations, mathematical statistical operations, etc. Another type of operations (e.g. query type) can be assigned to operations for querying the resource usage records stored in the data storage 121. Another type of operations (e.g. data manipulation language (DML) type) can be assigned to DML operations like select, insert, delete, and update data in the data storage. Yet, another type of operations (e.g. data description language (DDL) type) can be assigned to DDL operations like create, drop, alter, and rename of resource usage records or other data records stored in the data storage 121. The computer cluster can be operable for sending updates of the resource specifications to the network components. The updates of the resource specifications can be generated on a basis of processing the data generated according to the data requests. This functionality can be used for managing of the resources. For instance, when evaluation of the resource usage records performed in a course of execution of a data request reveals that a data traffic volume in a computer network has exceeded a threshold value, then the network components can be programmed by the computer cluster to offer data traffic at a different price. In the other words the computer cluster is operable for providing feedback to the network components operating usage of the resources.

Customization of the database engines can be implemented by implementing specific features of the database engines enabling advanced processing of the specific types of the resource usage records. In addition or as alternative, customization of the database engines can be experimentally determined by comparative processing of the same (test) sets of the resource usage records of specific types. In this case customization of the database engines is determined on a basis of comparison of time and/or (hardware) resources required by different database engines used for processing of the same (test) sets of the resource usage records. The database engine which has processed the set(s) of the resource usage records of one or more specific types faster than the other database engines and/or used less (hardware) resources for processing of the set(s) of the resource usage records of the one or more specific types than the other database engines is considered to be customized for processing of the one or more specific types of the resource usage records. The customization of the database records for processing of the resource usage records of specific types can be formulated as a set of selection criteria enabling selecting of the database engine which fits best for processing of a specific set of the resource usage records.

The database engines can be customized for execution of operations of specific types in the same way as they can be customized for processing of the resource usage records of specific types. Thus the set of selection criteria can be extended such that it determines not only the matching between types of the resource consumption records resource usage records to be processed in a process of the generating of the data according to the data request on the database engine and types of the resource usage records for processing of which the database engine is customized, but in addition or as an alternative the matching between the operation types of the operations specified is the data request and operation types of operations for which the database engine is customized. Applying these two matching criteria in conjunction, if necessary, with the availability (hardware) resources and/or a data volume to the resource usage records to be processed in accordance with the data request, can enable selection of the database engine which can execute the data request faster than the other database engines. Moreover, the set of selection criteria can be updated throughout operation of the computer cluster by monitoring performance characteristics of the database engines like (hardware) resources and/or time used by the database engine for processing of the data request, and/or execution of operations, and/or processing of resource usage records, and checking them against the specifications of the executed operations, numbers of the executed operations, and characteristics of the processed resource usage records such as a data volume of the processed resource usage records and/or their types. In addition, the set of selection criteria can be updated when one or more of the registered performance characteristics do not match one or more respective predefined performance characteristic. The updating of the set of selection criteria can be performed such that the performance characteristics registered during execution of subsequent data requests match predefined performance characteristics. For instance, the set of selection criteria can be updated such that execution of the subsequent data requests is performed not longer than the predefined time intervals.

The computer cluster can be configured to select the database engine of the set of the database engines 140, 150 according to the aforementioned set of selection criteria. The selection can be performed in conjunction with at least one of the following parameters: types of operations specified in a data request, types of the resource usage records to be processed in accordance with the data request, their data volumes, their overall data volume, availability of hardware resources, etc.

Facilitation of execution of data requests and/or processing of the resource consumption records can be achieved not only by selecting the best fitting database engine according to the set of selection criteria but by distributing of the workload of execution of the data requests and/or processing of the resource consumption records between hardware resources of the computer cluster 160 and/or tiers of a database engine. The database engine can comprise one or more of the following example tiers. One tier can be a logic tier configured for processing of the operations of data request, executing logical decisions of executing specific operations in accordance with the data requests, coordinating data traffic between other tiers of the database. Another tier can be a data tier configured for retrieving/storing/managing of data stored in the data storage 121. Yet another tier can be a tier customized for statistical operations and/or any other operations demanding high volume of mathematical calculus. As it is mentioned before each of the tiers can be executed on a respective hardware resource of the computer cluster 160. For instance one of the tiers (e.g. the logic tier) can be executed on the application server, while another tier (e.g. data tier) can be executed on the data storage server. Thus distribution of the workload between the tiers comprises distribution of the workload between hardware resources of the computer cluster 160.

The tiers of a database engine can be customized for execution of the operations of specific types in a similar way as the database engine itself. For instance, the data tier can be customized for execution of the operations having DDL and/or DML types, while the tier customized for execution of the mathematical operations can be used for execution of the operations having the mathematical operation type. The workload can be distributed between the tiers and the respective hardware resources such that data traffic between the hardware resources on which they are executed is minimized. For instance, when according to the data request data to be obtained as a result of execution of one of the operations which specification is comprised in a data request is be used as input for execution of another one of the operations which specification is comprised in the data request, then the distributing of the workload of a process of data generation according to the data request on the selected database engine by executing said operations between hardware resources of the set of hardware resources is performed such that the one of the operations and the another one of the operations are executed on the same hardware resource of the set of hardware resources. The minimization of the data traffic can be made in conjunction with the algorithm of the data generation to be performed in accordance with the data request. For instance, when the data request comprises operations of retrieving of data from the resource usage records (e.g. operations of DML type) and the retrieved data have to be used afterwards for mathematical calculus using another operations (e.g. operations of mathematical operation type) comprised in the data request, then these two types of the operations can be executed on the same hardware resource, e.g. on the data storage server. Alternatively, when time of execution of said operations is important, then the retrieved data can be sent for execution of the mathematical calculus to another computer system of the computer cluster which has high capacity for execution of mathematical calculus. In addition, when the retrieved data can be used for execution of any other data requests and/or this data is used several times for execution of said data request, it can be stored in a form of a database on one of hardware resources (e.g. computer system or server) of the computer cluster. Customization of tiers of database engines and their execution on hardware resources which hardware specifications provide their optimal performance in accordance with types of operations specified in the data request and/or types of the resource usage records, can enable dynamic assignment of the (available) hardware resources and/or improvement of performance characteristics of the database and/or its tiers for execution of a particular data request. The aforementioned examples can be generalized as follows: generation of data according to the data request on the selected database engine by executing of operations comprised in the data request comprises distribution of a workload of a process of the generation of the data according to the data request between hardware resources of a set of hardware resources comprising the data storage server and the application server, wherein each of the tiers is executed on the respective hardware resource assigned to the each of the tiers according to the distribution of the workload. For instance, one tier can be executed on the data storage server, while another tier can be executed on the application server.

The distribution of the workload can be implemented as multi parameter optimization procedure, wherein each of the optimization of parameters such as minimization of data traffic between hardware resources, selection of operations to be executed on the same hardware resource, time required for execution of particular operations on a particular hardware resource, priority of execution of the operations of the data request on a particular hardware resource, etc. has its own weight in the multi parameter optimization procedure, since reaching of all optimization objectives as the same time does not seem to be practical, i.e. might require utilization of a super computer. The distribution of the workload can be implemented by applying a set of matching criteria. The set of matching criteria can determine the following: matching between specifications of hardware resources required for execution of the tiers and specifications of the hardware resources of the set of hardware resources; and/or matching between types of the resource usage records to be processed in the process of the generating of the data according to the data request on the selected database engine by executing operations of data request and types of the resource usage records for processing of which the hardware resources are customized; and/or matching between a data volume of the resource usage records to be processed in the process of the generating of the data according to the data request on the selected database engine by executing said operations and data volumes for processing of which the hardware resources are customized. The set of matching criteria can be further optimized by registering performance characteristics of the tiers and/or databases in the process of execution of the data request and comparing them with the predefined ones. For instance, when processing of a volume of data on a hardware resource supporting execution of a particular tier took longer than expected then the set of the matching criteria has to be updated such that for processing of said volume of data on said tier a hardware resource with higher volume of (free) memory is required. In the other words, when the registered performance characteristic does not match the predefined one, the set of matching criteria can be updated in order to improve performance of the tier and/or database during subsequent execution of further data requests. The performance characteristic can be for instance duration in time of processing of a data volume of data records (of a specific type) by a database engine or a tier of the database engine, data traffic between hardware resources or tiers, efficiency of utilization of a hardware resource, duration in time of data generation according to a data request, duration in time of execution of one or more operations by a database engine or a tier of the database engine, etc.

Customization of the tiers arranged in the multitier architecture can enable pipeline processing of operations of data requests processed by the database engine. One tier can be customized for processing of one type of operations, while another tier can be customized for execution of another type of operations, wherein data generated by execution of one type of operations (e.g. operations of DML type) can be used as input data for execution of operations of the another type (e.g. operations of mathematical operation type). In the other words data generated by the tier is processed further by the another tier.

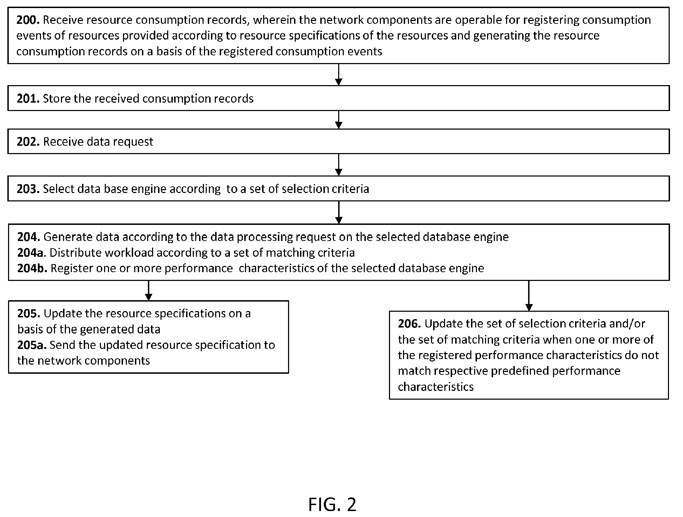

Fig. 2 depicts a computer implemented method for processing of the resource usage records on the computer cluster 160. The computer-implemented method begins with process block 200. In process block 200 the resource usage records are received on the data storage server 120 from the network components 110-113. The network components are operable for registering usage events of resources provided according to resource specifications of the resources and generating the resource usage records on a basis of the registered usage events. Process block 201 is executed after process block 200. In process block 201 the received resource usage records are stored in a data storage 121 of the data storage server 120. Process block 202 is executed after process block 201. In process block 202 a data request is received on the application server 130. The data request comprises specifications of operations to be executed using the resource usage records stored in the data storage 202. Process block 203 is executed after process block 202. In process block 203 one of database engines 140 of a set of database engines 140, 150 configured to operate the data storage is selected according to a set of selection criteria. Details of selection of the database engine are described above. Process block 203 can be executed on any of the computer systems of the computer cluster 160, preferably on the application server 130. Process block 203 can be executed by a component of the application server integrated with a component of the application server operable for the receiving of the data requests in process block 202. Process block 204 is executed after process block 203. In process block 204 data is generated according to the data request on the selected database engine by executing operations specified in the data request.

Process block 204 can comprise optional process blocks 204a and 205a. In process block 204a a work load of the generation of the data is distributed over tiers of the selected database engine and hardware resources used for execution of the tiers according to the aforementioned matching criteria. Details of the distribution of the work load are described above. In process block 204b one or more aforementioned performance characteristics are registered throughout the process of the generation of the data according to the data request received in process block 202.

An optional process block 205 can be executed after process block 204. In process block 205 updates of the resource specifications are generated on a basis of the data generated in process block 205. These updates can be sent to the network components 110-113 by the computer cluster 160 in an optional process block 205a. Alternatively they can be sent to the computer system which has sent the data request to the application server 130 in process block 202. Process blocks 205 and 205a can be executed by any hardware resource of the computer cluster, preferably by the application server.

Yet another optional process block 206 can be executed after process block 204. In process block the set of selection criteria and/or the set of the matching criteria are updated when one or more of the registered performance characteristics do not match the one or more respective predefined performance characteristics. Process block 206 can be executed by any hardware resource of the computer cluster, preferably by the data storage server. Details of the process block 206 are described above.

The preceding figures and accompanying description illustrate the example processes and computer implementable techniques. But example environment (or their software or other components) contemplate using, implementing, or executing any suitable technique for performing these and other tasks. It will be understood that these processes are for illustration purposes only and that the described or similar techniques may be performed at any appropriate time, including concurrently, individually, in parallel, and/or in combination. In addition, many of the operations in these processes may take place simultaneously, concurrently, in parallel, and/or in different orders than as shown. Moreover, the example environment may use processes with additional, fewer and/or different operations, as long as the methods remain appropriate.

In other words, although this disclosure has been described in terms of certain implementations and generally associated methods, alterations and permutations of these implementations and methods will be apparent to those skilled in the art. Accordingly, the above description of example implementations does not define or constrain this disclosure. Other changes, substitutions, and alterations are also possible without departing from the spirit and scope of this disclosure.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC.

Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of nonvolatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), LED (Light Emitting Diode), or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results.

## Claims

1. A computer-implemented method for processing resource usage records, the computer-implemented method comprising:
• receiving the resource usage records on a data storage server (120) from network components (110-113), wherein the network components are operable for registering usage events of resources provided according to resource specifications of the resources and generating the resource usage records on a basis of the registered usage events (200);
• storing the received resource usage records in a data storage (121) of the data storage server (120) (201);
• receiving on an application server (130) a data request comprising specifications of operations to be executed using the resource usage records stored in the data storage (202);
• selecting, according to a set of selection criteria, one of database engines (140) of a set of database engines (140, 150) configured to operate the data storage (203); and
• generating data according to the data request on the selected database engine by executing said operations (140) (204).

2. The computer-implemented method of claim 1, wherein the set of selection criteria is configured such that that the selected database engine is the one which is operable to execute the generating of the data according to the data request by executing said operations faster than other database engines of the set of database engines; and/or
wherein the set of selection criteria determines the following:
matching between operation types of the operations comprised in the data request and operation types of operations for which the database engines are customized; and/or
matching between types of the resource usage records to be processed in a process of the generating of the data according to the data request on the selected database engine and types of the resource usage records for processing of which the database engines are customized.

3. The computer-implemented method of claim 2, wherein the generating of the data according to the data request on the selected database engine by executing said operations comprises:
• registering a performance characteristic of performance of the selected database engine in a process of the generating of the data according to the data request on the selected database engine by executing said operations (204b);
wherein the computer-implemented method comprises:
• updating the set of selection criteria when the registered performance characteristic does not match a predefined performance characteristic (206).

4. The computer-implemented method of any of the preceding claims, comprising:
• updating the resource specifications on a basis of the generated data (205); and
• sending the updated resource specifications to the network components (205a).

5. The computer-implemented method of any of the preceding claims, wherein the selected database engine (140) comprises tiers (141-143) arranged in a multitier architecture of the selected database, wherein the generating of the data according to the data request on the selected database engine by executing said operations comprises:
• distributing a workload of a process of the generating of the data according to the data request on the selected database engine by executing said operations between hardware resources of a set of hardware resources comprising the data storage server and the application server, wherein each of the tiers is executed on the respective hardware resource assigned to the each of the tiers according to the distribution of the workload (204a).

6. The computer-implemented method of claim 5, wherein the distributing of the workload of the process of the generating of the data according to the data request on the selected database engine by executing said operations between hardware resources of the set of hardware resources comprising the data storage server and the application server is performed such that each of the tiers executes the operations having types for execution of which it is customized.

7. The computer-implemented method of claim 5, wherein the distributing of the workload of the process of the generating of the data according to the data request on the selected database engine between hardware resources of the set of hardware resources comprising the data storage server and the application server is performed such that data traffic in a process of executing of the generating of the data according to the data request on the selected database engine by executing said operations between hardware resources is minimized.

8. The computer-implemented method of claim 5, wherein according to the data request data to be obtained as a result of execution of one of the operations which specification is comprised in the data request is to be used as input for execution of another one of the operations which specification is comprised in the data request, wherein the distributing of the workload of the process of the generating of the data according to the data request on the selected database engine by executing said operations between hardware resources of the set of hardware resources comprising the data storage server and the application server is performed such that the one of the operations and the another one of the operations are executed on the same hardware resource of the set of hardware resources.

9. The computer-implemented method of claim 8, wherein the data to be obtained as a result of execution of one of the operations which specification is comprised in the data request, is stored as a database on said hardware resource of the set of hardware resources.

10. The computer-implemented method of claim 5, wherein the distributing of the workload of the process of the generating of the data according to the data request on the selected database engine by executing said operations between hardware resources of the set of hardware resources comprising the data storage server and the application server is performed according to a set of matching criteria.

11. The computer implemented method of claim 10, wherein the set of matching criteria determines the following:
matching between specifications of hardware resources required for execution of the tiers and specifications of the hardware resources of the set of hardware resources; and/or
matching between types of the resource usage records to be processed in the process of the generating of the data according to the data request on the selected database engine by executing said operations and types of the resource usage records for processing of which the hardware resources are customized; and/or
matching between a data volume of the resource usage records to be processed in the process of the generating of the data according to the data request on the selected database engine by executing said operations and data volumes for processing of which the hardware resources are customized.

12. The computer-implemented method of claim 11 or claim 10, wherein the generating of the data according to the data request on the selected database engine comprises:
• registering another performance characteristic of performance of the selected database engine in the process of the generating of the data according to the data request on the selected database engine by executing said operations (204b); wherein the computer-implemented method comprises:
• updating the set of matching criteria, when the another registered performance characteristic does not match another predefined performance characteristic (206).

13. The computer-implemented method of any of the preceding claims, wherein the database engines are operable for processing of the same resource usage records in the data storage.

14. A computer readable medium having stored thereon a computer executable code for execution by computer processors controlling a data storage server and an application server, wherein execution of the instructions of the executable code causes the computer processors to execute the computer-implemented method of claims 1-13.

15. A computer cluster comprising a data storage (120) server and an application server (130), wherein the data storage server is configured to perform the following:
• receiving resource usage records on the data storage server from network components (110-113), wherein the network components are operable for registering usage events of resources provided according to resource specification and generating the resource usage records on a basis of the registered usage events; and
• storing the received resource usage records in a data storage (121) of the data storage server;
wherein the application server is configured to perform the following:
• receiving on the application server a data request comprising specifications of operations to be executed using the resource usage records stored in the data storage;
• selecting, according to a set of selection criteria, one of database engines (140) of a set of database engines (140, 150) configured to operate the data storage; and
• generating data according to the data request on the selected database engine by executing said operations.
